# EUROPÄISCHE PATENTSCHRIFT

(11) **EP 4 087 070 B1**
(45) Veröffentlichungstag und Bekanntmachung des Hinweises auf die Patenterteilung: **22.07.2026**
(21) Anmeldenummer: 22170628.6
(22) Anmeldetag: 28.04.2022
(51) Int. Cl.: H02B 1/21, H02B 1/18

(54) **ADAPTER FÜR EINEN SAMMELSCHIENENTRÄGER**
ADAPTER FOR A BUS BAR HOLDER
ADAPTATEUR POUR UN SUPPORT DE BARRE OMNIBUS

(30) Priorität: 03.05.2021 DE 102021111396
(43) Veröffentlichungstag der Anmeldung: 09.11.2022
(73) Patentinhaber: Westnetz GmbH, 44139 Dortmund (DE)
(72) Erfinder: Fuchs, Tom, 52382 Niederzier (DE)
(74) Vertreter: Bals & Vogel Patentanwälte PartGmbB

(56) Entgegenhaltungen:
- EP-A1- 3 401 939
- DE-A1- 2 142 538
- US-A1- 2009 231 082

## Beschreibung

Die Erfindung betrifft einen Adapter für einen Sammelschienenträger, wie er insbesondere zum Einbau in Kabelverteilerschränken und Ortsnetzstationen zum Einsatz kommt, ein System aus einem Adapter und einem solchen Sammelschienenträger sowie einen Kabelverteilerschrank.

Die zunehmende Digitalisierung macht auch vor den elektrischen Verteilnetzen keinen Halt. Durch die zunehmende Dezentralisierung der Energieerzeugung muss die Netztopologie dieser veränderten Situation Rechnung tragen, und sogenannte Smart-Grids werden notwendig. Je genauer ein Netzzustand bekannt ist, desto besser kann auf veränderte Anforderungen reagiert werden. Außerdem ist es für den notwendigen Netzausbau von entscheidender Bedeutung, Kenntnis über den tatsächlichen Bedarf eines Ausbaus zu haben.

Hierzu notwendige Netzüberwachung macht sich insbesondere digitale Netztechnik, digitale Übertragungstechnik und digitale Bearbeitungstechnik zu Eigen. Die Überwachung des Netzes mit diesen Mitteln reicht herunter bis in die niederste Versorgungsebene, mithin den Ortsnetzverteiler bzw. den Verteilschrank in der Niederspannungsebene.

Die dort häufig in räumlich beengten Umgebungen installierte Netztechnik wird durch Einbau neuartiger Messtechnik und Kommunikationstechnik digitalisiert und für die Überwachung des elektrischen Netzes ausgerüstet. Die Überwachung des Netzes als solches ist hinlänglich bekannt, insbesondere wird eine Überwachung von Leistungsflüssen, Spannungspegeln, Stromflüssen, Phasenwinkeln, Blind-/Wirk-/Scheinleistung und dergleichen durchgeführt. Darüber hinaus ist es jedoch auch möglich, die technische Funktionalität von Netzkomponenten, wie beispielsweise Transformatoren oder dergleichen zu überwachen, wobei nicht nur elektrische Parameter, sondern andere betriebsrelevante Parameter dieser Netztechnik überwacht werden kann.

Der Einbau der hierfür notwendigen Messtechnik erfolgt heutzutage bedarfsgerecht und mittels proprietärer Technik. Dies erfordert für jeden Verteilschrank eine hieran angepasste Installation, die zum einen aufgrund der Individualität der Installation teuer ist und zum anderen durch einen hierfür geschulten und qualifizierten Mitarbeiter durchgeführt werden muss. Bei dieser Installation kommt es einerseits zu Fehlern, andererseits ist die Installation gefährlich.

Die elektrische Messtechnik kann durch den im Folgenden näher beschriebenen Sammelschienenträger mit geringem Aufwand in das elektrische Verteilnetz, insbesondere einen Kabelverteilerschrank oder eine Ortsnetzstation, eingebracht werden.

Beispiele bekannter Adapter für diesen Zweck sind in US2009/0231082A1, DE2142538A1 und EP3401939A1 dargestellt.

Problematisch ist allerdings, dass derartige Kabelverteilerschränke bzw. Ortsnetzstationen nur eine begrenzte Anzahl an Einbauräumen aufweisen. Wenn die Einbauräume ausgeschöpft sind, kann der Sammelschienenträger nicht mehr in den Kabelverteilerschrank bzw. die Ortsnetzstation eingebracht werden, ohne dass der Einbauraum vorher freigemacht wird.

Aufgabe der Erfindung ist es daher, den Sammelschienenträger auf einfache Art und Weise in einen Kabelverteilerschrank bzw. Ortsnetzstationen mit begrenztem bzw. ausgeschöpften Einbauraum einzubringen.

Die voranstehende Aufgabe wird gelöst durch einen Adapter für einen Sammelschienenträger mit den Merkmalen des Anspruchs 1, durch ein System aus Adapter und Sammelschienenträger mit den Merkmalen des Anspruchs 7 sowie durch einen Kabelverteilerschrank oder eine Ortsnetzstation mit den Merkmalen des Anspruchs 14. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Adapter beschrieben sind, selbstverständlich auch im Zusammenhang mit dem erfindungsgemäßen System und dem Kabelverteilerschrank sowie jeweils umgekehrt, sodass bezüglich der Offenbarung zu den einzelnen Erfindungsaspekten stets wechselseitig Bezug genommen wird bzw. werden kann.

In der elektrischen Energietechnik, insbesondere in den Versorgungsnetzen wird die elektrische Leistung in der Regel dreiphasig zu Teilnehmern transportiert. Hierzu sind an den Ortsnetzstationen oder den Verteilkästen ein oder mehrere Abgangsfelder oder, in anderen Worten, Ausgangsfelder vorgesehen, die einen dreiphasigen Abgang inklusive Neutral- und Schutzleiter ermöglichen. Die Abgangsfelder sind eingangsseitig dreiphasig auf jeweils eine Sammelschiene aufgelegt. Die Sammelschienen sind eingangsseitig mit dem Versorgungsnetz verbunden. Sowohl der Abstand als auch die Größe der Sammelschienen in den Verteilschränken ist genormt. Entsprechende Normen sind:
DIN 43 629-1 Kabelverteilerschrank, Gehäuse, Anbaumaße
DIN 43 629-2 Kabelverteilerschrank, Sockel, Anbaumaße
DIN 43 629-3 Kabelverteilerschrank, innerer Aufbau, Anbaumaße
EN 61 439-1 Niederspannungs-Schaltgerätekombinationen - Teil 1: Allgemeine Festlegungen (IEC 121B/71/CD:2018)
EN 61 439-2 Niederspannungs-Schaltgerätekombinationen - Teil 2: Energie-Schaltgerätekombinationen (IEC 61439-2:2011)
EN 61 439-3 Niederspannungs-Schaltgerätekombinationen - Teil 3: Installationsverteiler für die Bedienung durch Laien (DBO) (IEC 61439-3:2012)
EN 61 439-4 Niederspannungs-Schaltgerätekombinationen - Teil 4: Besondere Anforderungen für Baustromverteiler (BV)
EN 61 439-5 Niederspannungs-Schaltgerätekombinationen - Teil 5:
   Schaltgerätekombinationen in öffentlichen Energieverteilungsnetzen (IEC 61439- 5:2014 + Cor.:2015)
EN 62 208 Leergehäuse für Niederspannungs-Schaltgerätekombinationen - Allgemeine Anforderungen (IEC 62208:2011)

Auf die drei Sammelschienen wird pro Abgangsfeld oder, mit anderen Worten, Ausgangsfeld jeweils ein Sammelschienenträger aufgesetzt. In der Regel verlaufen in der Einbauposition die Sammelschienen in einer Horizontalen und die Sammelschienenträger in einer Vertikalen, insbesondere ist der Verlauf der Sammelschienenträger in ihrer Längsrichtung senkrecht zum Verlauf der Sammelschienen in ihrer Längsrichtung.

Der Sammelschienenträger umfasst dabei eine Basisplatte aus einem nicht leitenden Kunststoff. Auf einer Rückseite der Basisplatte sind in genormten Abständen zueinander Sammelschienenklemmen vorgesehen. Diese Sammelschienenklemmen können werkzeuglos oder auch mit einem Werkzeug auf die Sammelschienen aufgebracht und daran befestigt werden. Häufig ist es so, dass mit der Basisplatte ein Verschrauben der Sammelschienenklemmen an den Sammelschienen möglich ist. Die Sammelschienenklemmen stellen dann sowohl eine elektrische als auch eine mechanische Verbindung zu den Sammelschienen her. Die Basisplatte ist dadurch in dem Verteilschrank befestigt. Es ist jedoch auch möglich, dass alternativ oder zusätzlich hierzu Befestigungsschrauben vorgesehen sind, mit denen die Basisplatte an dem Verteilschrank befestigt werden kann.

In der Regel ist auf einer Basisplatte eines Sammelschienenträgers pro Phase eine Stecksicherung vorgesehen, um die Sammelschienen gegenüber den Abgangsfeldern abzusichern. Pro Abgangsfeld ist jeweils die Phase mit einer Stecksicherung abgesichert.

Es kann im Rahmen der Erfindung nun vorgesehen werden, den so definierten Bauraum für den Sammelschienenträger für Messtechnik zu nutzen. Dann aber besteht das Problem, dass der Sammelschienenträger ein freies Abgangs- bzw. Ausgangsfeld benötigt. Wenn alle Abgangsfelder jedoch belegt sind, kann der Sammelschienenträger nicht oder nur durch Freimachen eines belegten Abgangsfeldes an dem Abgangsfeld angeordnet werden bzw. in den Verteilschrank oder die Ortsnetzstation eingebracht werden.

Dieses Problem wird gemäß einem ersten Aspekt der Erfindung durch einen Adapter für einen Sammelschienenträger gelöst. Der Adapter weist zumindest ein Befestigungsmittel und zumindest drei voneinander beabstandete elektrische Kontaktelemente auf. Das zumindest eine Befestigungsmittel ist zur Befestigung des Sammelschienenträgers an dem Adapter eingerichtet. Die elektrischen Kontaktelemente sind dazu eingerichtet, elektrisch mit Sammelschienenklemmen des Sammelschienenträgers verbunden zu werden, wenn der Adapter an dem Sammelschienenträger befestigt wird. Ferner sind die elektrischen Kontaktelemente dazu eingerichtet, Sammelschienen und/oder Sicherungen in einem Kabelverteilerschrank elektrisch zu kontaktieren.

Der Adapter gemäß der Erfindung ist damit beim Einbau in dem Kabelverteilerschrank bzw. der Ortsnetzstation zwischen dem Sammelschienenträger und den Sammelschienen bzw. dem jeweiligen Ausgangsfeld verortet, welches belegt ist. Es sei angemerkt, dass wenn in dieser Anmeldung von Kabelverteilerschrank die Rede ist, darunter auch eine Ortsnetzstation zu verstehen ist. Ferner sei angemerkt, dass insbesondere ein Kabelverteilerschrank in einer Niederspannungsebene eines elektrischen Netzes gemeint ist. Durch den Einsatz des Adapters ist es nicht mehr notwendig, ein freies Ausgangsfeld zu haben. Stattdessen ist der Adapter mit den elektrischen Kontaktelementen derart eingerichtet, dass er die Sammelschienen und/oder Sicherungen eines belegten Ausgangsfeld in dem Kabelverteilerschrank elektrisch kontaktieren kann. Diese Einrichtung bzw. Ausbildung der elektrischen Kontaktelemente erfordert eine entsprechende Dimensionierung und Geometrie der elektrischen Kontaktelemente, damit die Sammelschienen und/oder Sicherungen elektrisch kontaktiert werden können. Durch seine elektrische Kontaktierung mit den Sammelschienenklemmen des Sammelschienenträgers verbindet der Adapter die elektrischen Kontaktelemente elektrisch mit den Sammelschienen am belegten Ausgangsfeld und stellt so die Funktionalität des Sammelschienenträgers mit der darauf befindlichen Messtechnik sicher. Für die elektrische Kontaktierung mit den Sammelschienenklemmen können elektrische Leitungen, insbesondere in Form von Schienen oder Kabeln, in dem Adapter vorhanden sein, insbesondere geführt werden. Bei der Befestigung des Adapters an dem Sammelschienenträger werden diese elektrischen Leitungen dann mit den jeweiligen Sammelschienenklemmen des Sammelschienenträgers verbunden. Unter einer elektrischen Verbindung bzw. einem elektrischen Kontakt wird dabei erfindungsgemäß verstanden, dass die jeweiligen Komponenten der elektrischen Verbindung bzw. des elektrischen Kontakts elektrisch leitfähig miteinander verbunden werden, sodass ein elektrischer Strom zwischen diesen fließen kann.

Vorteilhafterweise können die elektrischen Kontaktelemente als Klemmen ausgebildet werden. Dies ermöglicht das Herstellen einer Klemmverbindung zwischen dem Adapter und dem Ausgangsfeld bzw. der darin liegenden Sammelschienen oder angeschlossenen Sicherungen, insbesondere entsprechender Sicherungsschiene, in dem Kabelverteilerschrank bzw. der Ortsnetzstation. Die Klemmverbindung kann entsprechend auch eine mechanische Befestigung des Adapters innerhalb des Kabelverteilerschranks sicherstellen. Die Klemmen können aus Ausnehmungen eines Gehäuses des Adapters herausgeführt sein.

Ferner kann vorteilhafterweise vorgesehen werden, dass jede der Klemmen zumindest einen elektrischen Kontakt und eine den zumindest einen elektrischen Kontakt umgebende elektrische Isolierung aufweisen. Durch die elektrische Isolierung des zumindest einen elektrischen Kontaktes können die Klemmen berührungssicher ausgebildet werden. Entsprechend kann auch bei engen Bauraumverhältnissen innerhalb des Kabelverteilerschranks sichergestellt werden, dass die Installation des Sammelschienenträgers mittels des Adapters darin ohne Gefährdung für den Installateur erfolgen kann, selbst wenn der Kabelverteilerschrank nicht spannungsfrei geschaltet wird.

Erfindungsgemäß ist vorgesehen, dass sich die elektrischen Kontaktelemente im Wesentlichen senkrecht zu einer mittels des zumindest einen Befestigungsmittels vermittelbaren bzw. vermittelten Befestigungsrichtung des Sammelschienenträgers an dem Adapter erstrecken. Mit anderen Worten es ist vorgesehen, dass das zumindest eine Befestigungsmittel eine Befestigung des Sammelschienenträgers in einer Befestigungsrichtung an dem Adapter erlaubt, die sich im Wesentlichen senkrecht zu den elektrischen Kontaktelementen, insbesondere einer Längserstreckungsrichtung der elektrischen Kontaktelemente, erstreckt. Unter im Wesentlichen senkrecht werden dabei exakt senkrecht sowie technisch bedingte Abweichungen von bis zu 10 ° verstanden. Bei einem System aus Adapter und daran befestigtem Sammelschienenträger ergibt sich folglich eine Anordnung, bei der der Adapter in einer gemeinsamen Anordnungsebene mit dem Sammelschienenträger angeordnet ist, wobei sich die elektrischen Kontaktelemente im Wesentlichen senkrecht zu dieser Anordnungsebene erstrecken.

Es kann weiterhin vorgesehen werden, dass der Adapter zumindest ein Fixierungsmittel zur Fixierung des Adapters innerhalb des Kabelverteilerschranks aufweist. Dabei kann es sich um tragende Fixierungsmittel handeln, die der Fixierung des Adapters, insbesondere an bzw. neben den Sicherungen oder einer damit verbundenen Struktur an dem belegten Ausgangsfeld dienen. Dadurch kann die Befestigung des Adapters in dem Kabelverteilerschrank besonders stabil ausgestaltet werden.

Vorgesehen sein kann ferner, dass der Adapter ein Schwenkgelenk aufweist, an dem das zumindest eine Befestigungsmittel angeordnet ist, sodass der Sammelschienenträger relativ gegenüber dem Adapter verschwenkt werden kann, wenn der Sammelschienenträger am Adapter befestigt ist. Ein solches Schwenkgelenk ermöglicht die Anordnung des Sammelschienenträgers wahlweise zu beiden Seiten des Adapters hin bzw. links und rechts des Adapters, sodass die Position des Sammelschienenträgers an dem Adapter jeweils an die Bauraumposition des jeweiligen Kabelverteilerschranks flexibel angepasst werden kann.

Zusätzlich oder alternativ ist möglich, dass die elektrischen Kontaktelemente ausziehbar und/oder abnehmbar ausgebildet sind. Beispielsweise können die elektrischen Kontaktelemente innerhalb des Adapters derart ausgebildet sein, dass sie an einander gegenüberliegenden Seiten ausziehbar bzw. ausfahrbar und einziehbar bzw. einfahrbar ausgebildet sind. Möglich ist auch, dass an den gegenüberliegenden Seiten jeweilige Aufnahmen für die elektrischen Kontaktelemente in dem Adapter vorgesehen sind, an die die elektrischen Kontaktelemente angebracht werden können. Dies ermöglicht es, eine von zwei gegenüberliegenden Seiten des Adapters für den elektrischen Anschluss an ein Ausgangsfeld bzw. die dortigen Sammelschienen und/oder Sicherungen zu wählen. Dies hat den Vorteil, dass damit auch eine Position des Sammelschienenträgers relativ innerhalb des Kabelverteilerschranks entsprechend der Anordnung des Adapters am Ausgangsfeld variiert werden kann, insbesondere wenn das zumindest eine Befestigungsmittel nur eine Position des Sammelschienenträgers neben dem Adapter erlaubt.

Zusätzlich oder alternativ ist möglich, dass ein erstes Befestigungsmittel an einer ersten Seite des Adapters angeordnet ist und ein zweites Befestigungsmittel an einer der ersten Seite des Adapters gegenüberliegenden zweiten Seite angeordnet ist. Das erste und das zweite Befestigungsmittel können jeweils baugleich sein. Entsprechend ist es möglich, dass der Installateur des Sammelschienenträgers mittels der Befestigung entweder an der ersten Seite oder an der zweiten Seite entsprechend dem verfügbaren Bauraum in dem Verteilschrank oder der Ortsnetzstation festlegen kann, ob der Sammelschienenträger links oder rechts neben dem Adapter positioniert wird. Dies ist dann vorteilhaft, wenn das Verdecken von Sicherungen an einem benachbarten Ausgangsfeld vermieden werden kann, damit auf diese bei Bedarf auch ohne Ausbauen des Adapters mit dem Sammelschienenträger zugegriffen werden kann.

Gemäß einem zweiten Aspekt der Erfindung wird die eingangs erwähnte Aufgabe gelöst durch ein System aus einem Adapter gemäß dem ersten Aspekt der Erfindung und einem Sammelschienenträger, wobei der Sammelschienenträger mittels des zumindest einen Befestigungsmittels an dem Adapter befestigt ist und die elektrischen Kontaktelemente elektrisch mit den Sammelschienenklemmen verbunden sind.

Dabei kann vorgesehen sein, dass der Sammelschienenträger eine Basisplatte aufweist.

Ferner kann der Sammelschienenträger zumindest drei auf einer Rückseite der Basisplatte angeordnete, in einer Längsrichtung der Basisplatte voneinander beabstandete Sammelschienenklemmen, die elektrisch mit den elektrischen Kontaktelementen verbunden sind, aufweisen.

Auch kann der Sammelschienenträger von einer jeden Sammelschiene zu einer Vorderseite der Basisplatte geführte, mit jeweils einem Schutzschalter, insbesondere einem Lasttrennschalter, verbundene elektrische Anschlussleitungen aufweisen.

Zudem kann der Sammelschienenträger zumindest ein auf der Basisplatte montiertes Messgerät zur elektrischen Eigenversorgung und zur Erfassung zumindest einer elektrischen Größe aufweisen. Das Messgerät kann mit zumindest einer der Sammelschienenklemmen über zumindest einen Ausgang eines der Schutzschalter verschaltet sein.

Als Basisplatte kann eine standardisierte Basisplatte eingesetzt werden, die in ihren Baumaßen an die Größe des Abgangsfeldes angepasst ist. Insbesondere ihre Höhen- und Breitenerstreckung kann so angepasst sein, dass sie einem, bevorzugt gemäß einer der eingangs genannten Normen genormten Bauraum für ein Abgangsfeld in einem Verteilschrank entspricht.

Der Sammelschienenträger kann somit über die Sammelschienenklemmen elektrisch und mechanisch in einer an sich bekannten Art und Weise mit den Sammelschienen des Verteilschranks verbunden werden. Wenn kein Adapter genutzt wird, dann erfolgt dies direkt. Wenn ein Adapter erforderlich ist, weil alle Ausgangsfelder belegt sind, erfolgt die elektrische und mechanische Befestigung des Sammelschienenträgers an den Sammelschienen des Verteilschranks mittels des Adapters.

Darüber hinaus kann vorgesehen sein, dass von jeder Sammelschienenklemme jeweils eine Anschlussleitung an die Vorderseite der Basisplatte geführt ist, insbesondere durch eine Durchgangsöffnung der Basisplatte. Bevorzugt ist, wenn alle Anschlussleitungen durch eine gemeinsame Durchgangsöffnung geführt sind. Die Durchgangsöffnung kann dabei in einem Mittenbereich zwischen zwei Sammelschienenklemmen von diesen in Längsrichtung beabstandet angeordnet sein.

Die Anschlussleitungen können kurzschlussfest auf die Vorderseite der Basisplatte geführt sein. Auf der Vorderseite ist ein Schutzschalter auf der Basisplatte montiert. Der Schutzschalter ist dabei insbesondere ein Lasttrennschalter. Über den Schutzschalter lässt sich die hieran anzuschließende Messtechnik spannungsfrei schalten, insbesondere auch unter Last. Bevorzugt wird eine vierpolige Schutzschaltung vorgesehen, bei der nicht nur die Außenleiter L1, L2, L3, sondern auch der Neutralleiter N getrennt wird, was insbesondere eine Sicherheit bei asymmetrischen Netzbelastungen darstellt.

Die Installation eines Sammelschienenträgers ist jedem eingewiesenen Installateur hinlänglich bekannt und gehört zu den routinemäßigen Handgriffen. Dadurch ist es möglich, den gegenständlichen Sammelschienenträger in einer besonders einfachen Art und Weise zu installieren. Dies kann sogar unter Spannung erfolgen.

Es wird vorgeschlagen, dass zumindest ein auf der Basisplatte montiertes Messgerät zur elektrischen Eigenversorgung und zur Erfassung zumindest einer elektrischen Größe mit zumindest einer der Sammelschienenklemmen über zumindest einen Ausgang eines der Schutzschalter verschaltet ist. Eine Verschaltung bedeutet in diesem Zusammenhang lediglich eine mittelbare oder unmittelbare elektrische Verbindung, insbesondere kann bei einer Verschaltung auch ein zwischengeschaltetes Gerät, wie beispielsweise ein Netzgerät vorgesehen sein.

Die Basisplatte nimmt eine Fläche innerhalb des Verteilkastens ein. Die auf der Basisplatte montierten Einrichtungen, wie Lasttrennschalter, Messgerät und die hier weiter beschriebenen Einrichtungen, mit Ausnahme zumindest teilweise der Messsensorik, sind insbesondere so auf der Basisplatte angeordnet, dass diese aus der von der Basisplatte eingenommenen Grundfläche seitlich nicht herausragen. Somit ist der Sammelschienenträger durch die Grundfläche der Basisplatte hinsichtlich seines Flächenverbrauchs in dem Verteilkasten definiert und ein Einbau kann in einem frei verfügbaren Abgangsfeld ohne weiteres erfolgen. Der Sammelschienenträger kann einfach eingesetzt und es muss nicht befürchtet werden, dass die auf der Basisplatte verbauten Einrichtungen baulich mit anderen Einrichtungen des Verteilkastens in Konkurrenz treten. Bei keinem frei verfügbaren Abgangsfeld, wie es häufig der Fall ist, kann der Adapter bzw. das System hingegen vorteilhafterweise zum Einsatz kommen.

Das auf der Basisplatte montierte Messgerät wird elektrisch eigenversorgt über die Anschlussleitungen, insbesondere über eine Anschlussleitung und den Neutralleiter. Das heißt, dass der Sammelschienenträger mit dem Messgerät keine weitere elektrische Energieversorgung benötigt, als diese vom zu messenden Netz ohnehin zur Verfügung gestellt wird. Das so betriebene Messgerät ist darüber hinaus zur Erfassung zumindest einer elektrischen Größe an zumindest einer der Sammelschienenklemmen mittels zumindest einem Ausgang eines Schutzschalters verschaltet.

Durch den Sammelschienenträger ist es möglich, digitale Netzerfassung in besonders einfacher, kostengünstiger und schnell installierbarer Art und Weise bis in die niederste Netzebene zu bringen und in den dort vorhandenen Verteilkästen, was die Ortsnetzstationen umfasst, durch nur gering geschultes Personal installieren zu lassen. Es ergeben sich erhebliche Kostenvorteile gegenüber bisherigen Lösungen, da keine individuelle Verschaltung notwendig ist, sondern ein standardisierter Sammelschienenträger in einen Standardeinbauraum in einer standardisierten Art und Weise eingebaut wird, wobei die Funktion des Sammelschienenträgers gegenständlich gegenüber bisherigen um die Messung erweitert ist. Anders als bisherige Sammelschienenträger, auf denen die Sicherungen eingesteckt werden, wird der gegenständliche Sammelschienenträger zur Erfassung von Netzparametern eingesetzt.

Eine elektrische Eigenversorgung über den Anschluss an einen Ausgang zumindest eines der Schutzschalter wird nicht nur für die Messtechnik, sondern auch für die Kommunikationstechnik vorgeschlagen.

Gemäß einem Ausführungsbeispiel wird vorgeschlagen, dass die Basisplatte eine Längenerstreckung in Längsrichtung von zumindest drei Sammelschienen eines Kabelverteilerschranks oder einer Ortsnetzstation aufweist. Wie bereits eingangs erläutert, sind die Sammelschienen sowohl in Abstand als auch in Größe genormt. An diese Norm angepasst ist der gegenständliche Sammelschienenträger ausgelegt, wobei sich die Basisplatte zumindest über die drei Sammelschienen erstreckt.

Die Basisplatte kann rückseitig wannenförmig mit umlaufenden Seitenwänden gebildet sein. In den Seitenwänden sind einander gegenüberliegende Ausnehmungen vorgesehen, die zur Aufnahme der Sammelschienen geformt sind. Zwischen jeweils zwei Aufnahmen, die zur Aufnahme einer der Sammelschienen vorgesehen sind, ist jeweils eine Sammelschienenklemme vorgesehen. Durch die umlaufenden Seitenwände besteht ein Berührschutz im Bereich des Sammelschienenträgers gegenüber den Sammelschienen.

Die Basisplatte hat eine Längenerstreckung in Längsrichtung und eine quer, bevorzugt senkrecht dazu verlaufende Breitenerstreckung in Breitenrichtung. Die Breitenerstreckung der Basisplatte ist bevorzugt an den Bauraum eines Abgangsfeldes angepasst. Insbesondere ist die Breitenerstreckung derart, dass sie einen oder ein ganzzahliges vielfaches eines Steckplatzes eines Kabelverteilerschranks eines Niederspannungsnetzes einnimmt. Ein Steckplatz ist in diesem Sinne so zu verstehen, dass er ein Abgangsfeld an den drei Sammelschienen bildet. In herkömmlichen Installationen nimmt ein Ausgangsfeld jeweils einen Steckplatz ein. Die Breite eines solchen Steckplatzes ist, wie oben beschrieben, genormt. Somit kann der gegenständliche Sammelschienenträger stets in einen oder eine Mehrzahl von nebeneinander liegenden Steckplätzen in einen Kabelverteilerschrank problemlos eingesetzt werden, wenn kein freier Steckplatz vorhanden ist. Anderenfalls jedoch wird der Adapter bzw. kann das sich aus dem Adapter und dem Sammelschienenträger ergebende System genutzt werden, um den Sammelschienenträger auch dann zu installieren, wenn alle Steckplätze belegt sind.

Gemäß einem Ausführungsbeispiel wird vorgeschlagen, dass ein Neutralleiter-Abgriff seitlich an der Basisplatte geführt ist. Wie bereits erwähnt, sind die Anschlussleitungen zu den Sammelschienenklemmen von der Rückseite an die Vorderseite der Basisplatte geführt. Ein Abgriff an eine Neutralleiterschiene kann jedoch auch seitlich in den Sammelschienenträger hineingeführt werden und insbesondere auf den Schutzschalter aufgelegt werden. Um Missverständnisse zu vermeiden, sei angemerkt, dass es auch möglich ist, einen Neutralleiterabgriff wie die Anschlussleitungen zu den Außenleiter zu bilden und insbesondere von der Rückseite zur Vorderseite der Basisplatte zu führen, insbesondere durch die Basisplatte hindurch zu führen.

Gemäß einem Ausführungsbeispiel wird vorgeschlagen, dass ein auf der Basisplatte montiertes Netzgerät zur elektrischen Eigenversorgung zumindest des Messgerätes, zwischen dem Messgerät und zumindest einem Ausgang eines der Schutzschalter verschaltet ist. Das Netzgerät ist ein herkömmliches Netzgerät, insbesondere zur Hutschienenmontage. Auch der Schutzschalter ist ein herkömmlicher Schutzschalter, insbesondere zur Hutschienenmontage. Auf der Vorderseite der Basisplatte können in Längsrichtung beabstandet voneinander Hutschienen angeordnet sein, auf die die Einrichtungen der Sammelschiene aufgesteckt werden können, insbesondere der Schutzschalter, das Netzgerät, das Messgerät, der noch zu beschreibende Steuerrechner und die noch zu beschreibenden Kommunikationsmittel zumindest teilweise und gegebenenfalls auch Messsensorik. In Längsrichtung beabstandet voneinander sind zwei oder mehr Hutschienen in Breitenrichtung verlaufend auf der Basisplatte angeordnet, die eine Montage der Einrichtungen besonders einfach macht. Das Netzgerät bezieht elektrische Leistung von dem zu messenden elektrischen Netz, insbesondere über einen AC/DC Wandler und stellt insbesondere eine DC Spannung für die Messtechnik (Messmittel), die Steuertechnik (Steuermittel) und die Kommunikationstechnik (Kommunikationsmittel) zur Verfügung. Unter Messtechnik kann insbesondere sowohl das Messgerät als auch die Messsensorik verstanden werden. Unter Steuertechnik kann insbesondere der Steuerrechner verstanden werden, der ebenfalls hutschienenmontiert sein kann. Ein Steuerrechner kann insbesondere ein Controller, insbesondere ein SPS-Controller sein, der insbesondere ein Netzwerk und/oder Feldbusanschluss aufweist. Unter Kommunikationstechnik kann insbesondere ein Kommunikationsrechner, z.B. ein drahtgebundener oder drahtloser Router, insbesondere ein Funkrouter verstanden werden.

Gemäß einem Ausführungsbeispiel wird vorgeschlagen, dass auf der Basisplatte Kommunikationsmittel montiert sind. Kommunikationsmittel können insbesondere zur drahtgebundenen oder drahtlosen Kommunikation eingerichtet sein. So ist beispielsweise ein Anschluss an ein Weitverkehrsnetz, drahtgebunden oder drahtlos möglich, insbesondere ein Glasfaseranschluss, ein ADSL-Anschluss, ein SDSL- Anschluss oder dergleichen möglich. Auch eine kabellose Anbindung an ein Weitverkehrsnetz, beispielsweise an ein zellulares Funknetz ist möglich. Hierbei kann insbesondere eine Anbindung an ein 3G-Netz, LTE-Netz, 5G-Netz, ein Richtfunknetz oder dergleichen vorgesehen sein. Die Kommunikationsmittel können in der Form eines Routers eingerichtet sein, beispielsweise eines Funkrouters, beispielsweise eines UMTS oder LTE oder 5G-Routers. Mit Hilfe der Kommunikationsmittel ist es sowohl möglich, mittels Fernwirktechnik verschiedene Messgrößen von dem Steuerrechner an einen entfernten Rechner zu senden, als auch von dem entfernten Rechner an den Steuerrechner Steuerbefehle zu senden. Die auf der Basisplatte montierten Endgeräte sind insbesondere über den Schutzschalter mit dem zu überwachenden Netz verbunden und sind somit vor Überströmen abgesichert.

Die auf der Basisplatte montierten Komponenten (Einrichtungen/Mittel) können mit einer gemeinsamen Schutzhaube in der Form eines montierbaren Deckels vor Berührung und Verschmutzung geschützt werden. Dadurch bietet der Sammelschienenträger eine sichere Möglichkeit, auf kleinsten Bauraum Netzparameter zu überwachen. Um sicher in einen Kabelverteilerschrank zu passen, kann der Deckel samt Basisplatte eine maximale Einbauhöhe von 19 cm haben.

Gemäß einem Ausführungsbeispiel wird vorgeschlagen, dass das Messgerät mit Messsensorik verschaltet ist. Solche Messsensorik kann zum einen Netzparameter überwachen und/oder zum anderen weitergehende physikalische Größen in und an dem Sammelschienenträger erfassen. Hierbei ist insbesondere eine Messung von elektrischen Parametern am Ausgangsanschluss des Kabelverteilerschranks möglich. Die Messsensorik kann analoge und/oder digitale Messwerte erfassen. Insbesondere ist eine Erfassung von Spannungen und Strömen auf den drei Außenleiter und dem Neutralleiter an dem Ausgangsanschluss möglich.

Hierfür kann ein dreiphasiges Leistungsmessgerät, beispielsweise auf einer Hutschiene montiert, auf der Basisplatte angeordnet sein. Hierüber können an den Klemmen L1, L2, L3 und N des Ausgangsanschlusses elektrische Größen wie Strom und Spannung als auch Phase erfasst werden. Über Rogowski-Spulen können die Ströme an den jeweiligen Kabeln des Ausgangsanschlusses erfasst werden. Mit Hilfe dieser Leistungsmessung können Wirk-, Schein- und Blindleistung erfasst werden. Auch können Energieverbrauch, Leistungsfaktor, Phasenwinkel, Frequenz als auch Unter-/Überspannung und/oder Unter-/Überstrom erfasst und entsprechende Werte ausgegeben werden. Auch eine Oberschwingungsanalyse ist möglich, um transiente Netzparameter erfassen zu können. Entsprechende elektrische Größen können auch am Eingangsanschluss erfasst werden, womit eingangsseitig und/oder ausgangsseitig eine Aussage über die Netzqualität möglich ist.

Mit Hilfe von weiterer Sensorik, wie beispielsweise einem Füllstandsensor können beispielsweise Ölfüllstände von Transformatoren erfasst werden. Auch ein Drucksensor kann beispielsweise eine SF-6 Gas Leckage in einer gasisolierten Schaltanlage erfassen. Ein Schaltkontakt kann beispielsweise erfassen, ob der Kabelverteilerschrank geöffnet oder geschlossen ist. All diese Messwerte können über die Messsensorik erfasst und entsprechende Signale an den Steuerrechner ausgegeben werden.

Gemäß einem Ausführungsbeispiel wird vorgeschlagen, dass das Messgerät zumindest zur Leistungsmessung an einem Ausgangsanschluss und/oder an den Sammelschienenklemmen des Eingangsanschlusses eingerichtet ist.

Gemäß einem dritten Aspekt der Erfindung wird die eingangs erwähnte Aufgabe gelöst durch einen Kabelverteilerschrank bzw. eine Ortsnetzstation mit einem System nach dem zweiten Aspekt der Erfindung.

Dabei können alle Ausgangsfelder des Kabelverteilerschranks oder der Ortsnetzstation mit Sicherungen bestückt sein. Der Adapter mit seinen elektrischen Kontaktelementen kann die Sammelschienen und/oder Sicherungen eines der belegten Ausgangsfelder elektrisch kontaktieren und vor diesem elektrisch kontaktierten Ausgangsfeld angeordnet sein. Der Adapter kann entsprechend die Sicherungen des Ausgangsfeldes, vor dem er angeordnet ist, verdecken.

Auch kann der Sammelschienenträger vor einem Ausgangsfeld angeordnet sein, welches unmittelbar zu dem Ausgangsfeld benachbart ist, vor dem der Adapter angeordnet ist bzw. von dem die elektrischen Kontaktelemente des Adapters elektrisch kontaktiert werden. Auch der Sammelschienenträger kann die Sicherungen des Ausgangsfeldes, vor dem er angeordnet ist, verdecken.

Anhand der beigefügten Zeichnung wird die Erfindung anhand von Ausführungsbeispielen nachfolgend näher erläutert. Sämtliche aus den Ansprüchen, der Beschreibung oder der Figur hervorgehenden Merkmale, einschließlich konstruktiver Einzelheiten, können sowohl für sich als auch in den beliebigen verschiedenen Kombinationen erfindungswesentlich sein. Es zeigen:
- Fig. 1: eine schematische Ansicht eines Kabelverteilerschranks gemäß einem Ausführungsbeispiel;
- Fig. 2: einen Kabelverteilerschrank im eingebauten Zustand gemäß einem Ausführungsbeispiel;
- Fig. 3: einen Sammelschienenträger gemäß einem Ausführungsbeispiel;
- Fig. 4: eine Unterseite eines Sammelschienenträgers gemäß einem Ausführungsbeispiel;
- Fig. 5: ein zusammengebauter Sammelschienenträger;
- Fig. 6: ein System aus dem Sammelschienenträger und einem Adapter gemäß einem Ausführungsbeispiel;
- Fig. 7a, 7b: ein elektrisches Kontaktelement des Adapters aus Fig. 6;
- Fig. 8: den an einem Ausgangsfeld eines Kabelverteilerschranks befestigten Adapter der Fig. 6; und
- Fig. 9: den Kabelverteilerschrank aus Fig. 2 mit dem System aus Fig. 6.

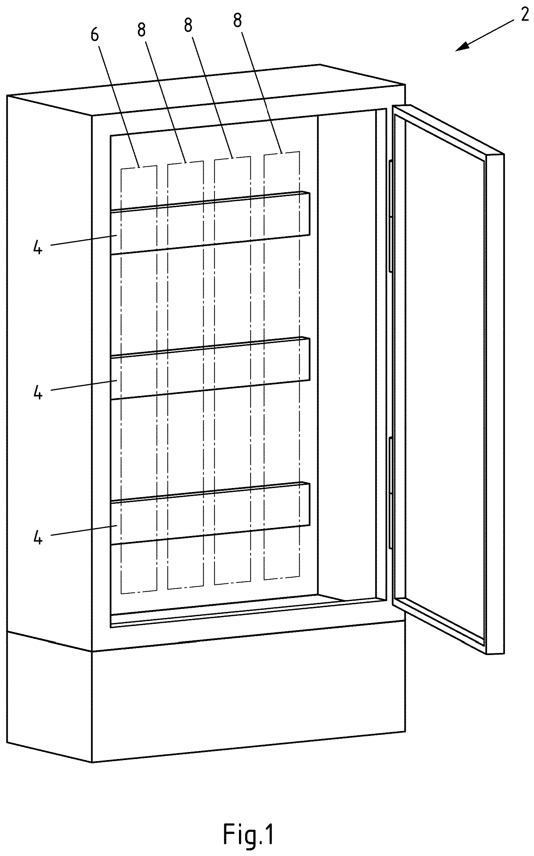

Elemente mit gleicher Funktion und Wirkungsweise sind in den Figuren 1 bis 9 jeweils mit denselben Bezugszeichen versehen.

Fig. 1 zeigt einen Kabelverteilkasten bzw. Kabelverteilerschrank 2. Ein Kabelverteilkasten, auch Schaltschrank oder Ortsnetzverteilschrank genannt, dient zur Ankopplung einer oder mehrerer elektrischer Verteilstränge an einen Netzknoten.

Ein Kabelverteilerschrank 2 ist in der Regel mit zumindest drei Sammelschienen 4 ausgestattet. Die Sammelschienen 4 sind metallische Flachleiter, die im Einbauzustand in der Regel in einer Horizontalen verlaufen. Die Maße der Sammelschienen 4 sind in der Regel genormt, insbesondere was deren Materialstärke und Breite angeht. Die Länge der Sammelschienen 4 kann an die Breite des Kabelverteilerschranks 2 angepasst sein. Durch einen definierten Abstand der Sammelschienen 4 untereinander wird sichergestellt, dass eine Bestückung des Kabelverteilerschranks 2 mit Standardkomponenten möglich ist.

An einem Eingangsfeld 6 wird ein übergeordneter Netzstrang mit seinen drei Außenleiter über Einbausicherungen (nicht gezeigt) mit den Sammelschienen 4 elektrisch verbunden. Nebeneinander ausgehend von dem Eingangsfeld 6 sind Ausgangsfelder 8 vorgesehen. Die Ausgangsfelder 8 sind in der Regel sogenannte Einbauräume, die definierte Maße, insbesondere definierte Breiten haben. In diesen Ausgangsfeldern 8 können erneut über Sicherungen Abgangsstränge des elektrischen Verteilnetzes verbunden werden. Der Formfaktor und die Bauräume in dem Kabelverteilerschrank 2, insbesondere die Abstände der Sammelschienen 4 hier zueinander, als auch die Breite der Ausgangsfelder 8 ist genormt.

In zumindest einem Ausgangsfeld 8 ist Messtechnik angeordnet, ohne hierfür eine proprietäre, individuelle Bestückung vorsehen zu müssen. Um dies zu ermöglichen, ist ein Sammelschienenträger 12 vorgesehen.

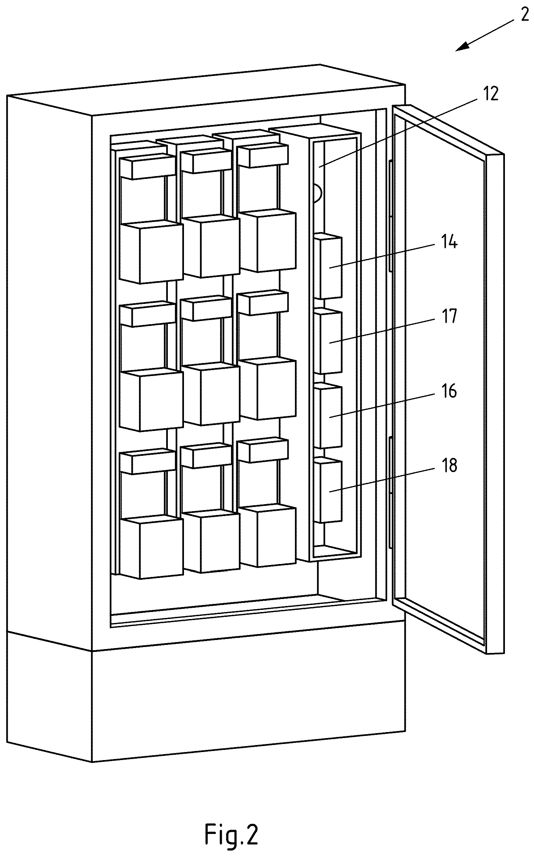

Fig. 2 zeigt einen mit Sicherungen 10 teilweise bestückten Kabelverteilerschrank 2. Das Eingangsfeld 6 aus Fig. 1 ist hier mit Sicherungen 10 bestückt. Neben dem Eingangsfeld 6 sind zwei Ausgangsfelder 8 aus Fig. 1 ebenfalls mit Sicherungen 10 bestückt. Ein Ausgangsfeld 8 aus Fig. 1 ganz rechts ist frei. Auf diesen freien Steckplatz ist nun ein Sammelschienenträger 12 aufgesetzt.

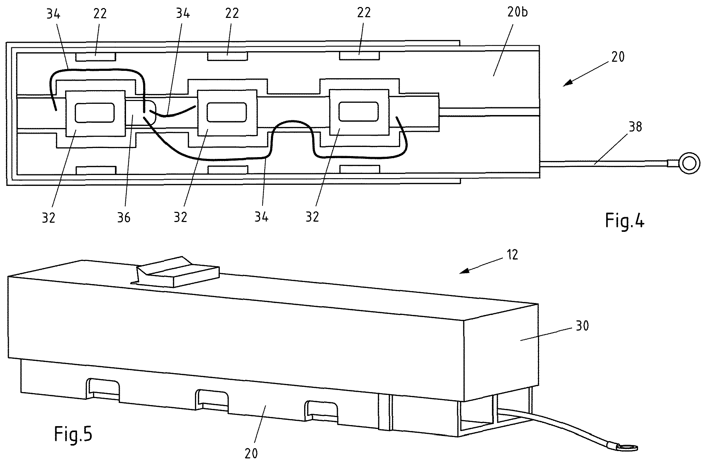

In den freien Bauraum am letzten Ausgangsfeld 8 kann, wie in der Fig. 2 gezeigt, ein Sammelschienenträger 12 eingesetzt werden. Hierbei wird über nachfolgend noch beschriebene geeignete Verbindungsmittel eine unmittelbare Verbindung des Sammelschienenträgers 12 mit den Sammelschienen 4 ermöglicht. Auf der Rückseite des Sammelschienenträgers 12 sind entsprechende Sammelschienenklemmen 32 vorgesehen (siehe Fig. 4), um den Sammelschienenträger 12 mit den Sammelschienen 4 zu verbinden.

Auf der gezeigten Vorderseite sind Schutzschalter 14 sowie Messtechnik 16, Steuertechnik 17 und Kommunikationstechnik 18 installiert. Die Steuertechnik 17 kann in der Art eines Prozessors, eines Microcontrollers, einer SPS oder dergleichen gebildet sein. Die Steuertechnik 17 kann über einen Bus, insbesondere einen Feldbus mit der Messtechnik 16 und der Kommunikationstechnik 18 verbunden sein. Mit Hilfe der Steuertechnik 17 kann die Funktion der durchgeführten Messung und Kommunikation bereitgestellt und überwacht werden.

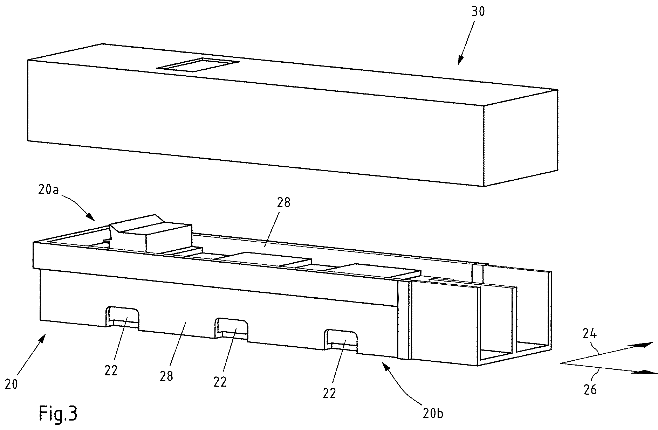

Der Sammelschienenträger 12 umfasst zumindest eine Basisplatte 20, wie in der Fig. 3 gezeigt ist. Fig. 3 zeigt die Basisplatte 20 von ihrer Vorderseite 20a. Auf der Rückseite 20b der Basisplatte 20 sind Ausnehmungen 22 vorgesehen. Die Ausnehmungen 22 dienen zur Aufnahme der Sammelschienen 4. Die Ausnehmungen 22 erstrecken sich über die gesamte Quererstreckung in Richtung 24 des Sammelschienenträgers 12.

Die Ausnehmungen 22 sind in der Längserstreckungsrichtung 26 des Sammelschienenträgers 12 voneinander beabstandet. Der Abstand der Ausnehmungen 22 voneinander entspricht dem Normabstand der Sammelschienen 4. Die Breite der Ausnehmungen 22 ist in der Regel so, dass sie eine Spielpassung mit den Sammelschienen 4 bilden.

Die Basisplatte 20 ist bevorzugt wannenförmig und hat Seitenwände 28. Zwischen den Seitenwänden 28 kann auf der Basisplatte 20 eine Mehrzahl von Einrichtungen installiert werden, insbesondere Schutzschalter 14, Messtechnik 16, Steuertechnik und die Kommunikationstechnik 18. Diese Einrichtungen sind vorinstalliert, so dass der Sammelschienenträger 12 lediglich auf die Sammelschienen 4 aufgesetzt werden muss, dort mechanisch und elektrisch verbunden werden muss und anschließend mit einem Deckel 30 verschlossen werden kann. Der Deckel 30 wird auf die Vorderseite 20a der Basisplatte 20 aufgesetzt und bevorzugt dort verklemmt oder verschraubt.

Fig. 4 zeigt die Basisplatte 20 von der Rückseite 20b. Zu erkennen ist, dass auf der Rückseite 20b Sammelschienenklemmen 32 im Bereich der Ausnehmungen 22 mittig auf der Basisplatte 20 montiert sind. Ausgehend von den Sammelschienenklemmen 32 verlaufen isolierte Kabel 34 entlang der Rückseite 20b zu einer Durchgangsöffnung 36 und werden dort auf die Vorderseite 20a geführt.

Die Sammelschienenklemmen 32 können von der Vorderseite 20a mit den Sammelschienen 4 befestigt, insbesondere schraubend befestigt werden. Über ein getrennt, seitlich auf die Basisplatte 20 geführtes Kabel 38, kann eine Verbindung mit einem Neutralleiter oder einem Erdungsleiter hergestellt werden.

Der zusammengebaute Sammelschienenträger 12 mit Basisplatte 20 und Deckel 30 ist in der Fig. 5 gezeigt. Zu erkennen ist, dass der Formfaktor so ist, dass dieser zu einem Ausgangsfeld 8 passt und wie in der Fig. 2 gezeigt, der Sammelschienenträger 12 in das Ausgangsfeld 8 eingesteckt werden kann.

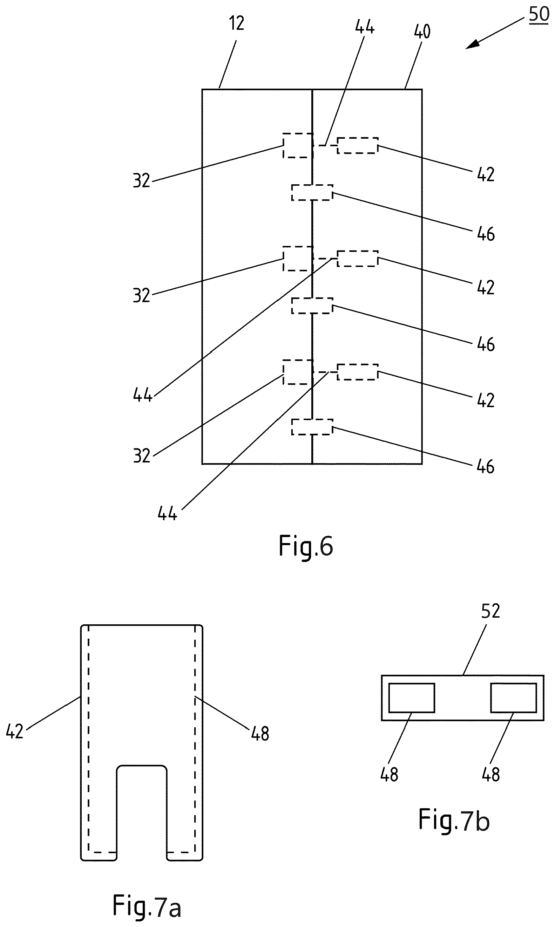

Wenn nun sämtliche Ausgangsfelder 8 eines Kabelverteilerschranks 2 belegt sind, kann der Sammelschienenträger 12 nicht ohne Weiteres bzw. nicht ohne Freimachen der Sammelschienen 4 von jeweils daran angeschlossenen Sicherungen 10 des Ausgangsfeldes 8 an dem Ausgangsfeld 8 angesteckt werden. Hier setzt der in Fig. 6 rein schematisch gezeigte Adapter 40 an, der zusammen mit dem Sammelschienenträger 12 ein System 50 bildet.

Fig. 6 zeigt den Sammelschienenträger 12 neben dem Adapter 40 in einem befestigten Zustand, wobei Fig. 6 einen Querschnitt des Systems 50 entlang einer gemeinsamen Anordnungsebene des Adapters 40 und des Sammelschienenträgers 12 zeigt.

Der Adapter 40 weist vorliegend beispielhafte drei Befestigungselemente 46 auf, die etwa in Form von Bohrungen und/oder Schrauben, Klemmelementen oder dergleichen ausgeführt sein können. Der Sammelschienenträger 12 kann jeweils dazu korrespondierende Befestigungselemente (nicht eingezeichnet) aufweisen, mittels derer der Adapter 40 mechanisch an dem Sammelschienenträger 12 befestigt wird.

Der Adapter 40 kann ein Gehäuse aufweisen, wie es in Fig. 6 mit seiner Außenkontur zu sehen ist. Das Gehäuse kann beispielsweise rechteckig sein und eine mit der Länge des Sammelschienenträgers 12 im Wesentlichen übereinstimmende Länge aufweisen. Das Gehäuse kann beispielsweise einen rechteckigen Querschnitt aufweisen, gleich oder ähnlich, wie dies beim Sammelschienenträger 12 möglich ist.

Aus dem Gehäuse des Adapters 40 ragen voneinander in Längsrichtung des Adapters 40 beabstandete elektrische Kontaktelemente 42 heraus, die vorliegend als Klemmen 42 ausgebildet sind, wie sie in Fig. 7a und 7b näher dargestellt sind. Die Klemmen 42 weisen jeweils elektrische Kontakte 48 auf, die von einem elektrischen Isolator 52 umgeben werden, der die Klemmen 42 berührungssicher macht.

Die Klemmen 42 sind innerhalb des Adapters 40 mit entsprechenden elektrischen Leitungen 44, insbesondere Schienen oder Kabeln, verbunden. Bei der Befestigung des Sammelschienenträgers 12 an dem Adapter 40 werden diese elektrischen Leitungen 44 jeweils mit den Sammelschienenklemmen 32 des Sammelschienenträgers 12 elektrisch verbunden. Dadurch lässt sich der Adapter 40 als ein elektrischer Adapter 40 nutzen, der den von den Klemmen 42 abgegriffenen Strom an die Sammelschienenklemmen 32 des Sammelschienenträgers 12 weiterleitet, sodass der Sammelschienenträger 12 seine Funktion wahrnehmen kann.

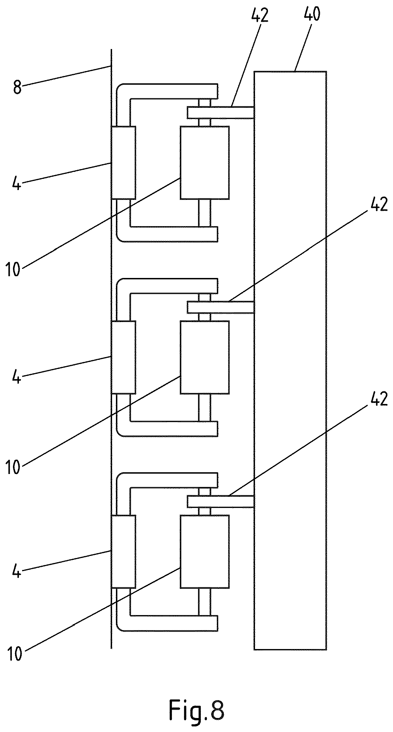

Vorteilhafterweise kann nun, wie Fig. 8 zeigt, das System 50 mit dem Adapter 40 unmittelbar auf ein belegtes Ausgangsfeld 8 aufgesteckt werden. In Fig. 8 ist hierzu beispielhaft in einer seitlichen Ansicht innerhalb des Verteilschranks 2 gezeigt, wie die Klemmen 42 jeweilige Sicherungsschienen von Sicherungen 10, die auf die Sammelschienen 4 des Ausgangsfeldes 8 aufgesteckt sind, festklemmen und dadurch eine elektrische Kontaktierung wie auch mechanische Befestigung erzielen.

Der Adapter 40 ermöglicht dadurch eine Nachrüstung bereits vorhandener Sammelschienenträger 12 wie auch Erstausrüstung neuer Sammelschienenträger 12 mit dem Adapter 40, um den Sammelschienenträger 12 auch bei voller Belegung sämtlicher Ausgangsfelder 8 eines Verteilschranks 2 einsetzen zu können.

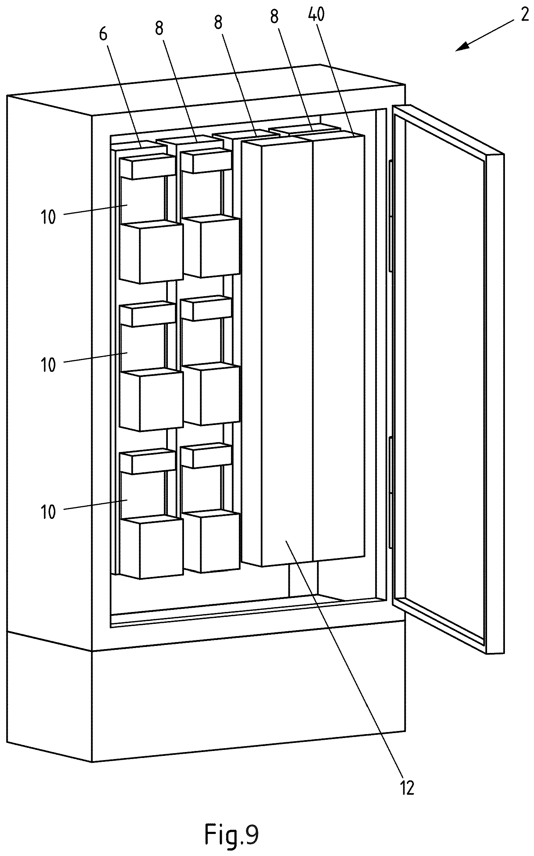

Wie in Fig. 9 gezeigt wird, erstreckt sich der Sammelschienenträger 12 dann unmittelbar neben dem Adapter 40 und verdeckt ein zu dem Ausgangsfeld 8 benachbartes Ausgangsfeld 8, von dem er die Spannung abgreift. Mit anderen Worten erstreckt sich die Anordnungsebene oder Befestigungsrichtung, in die der Adapter 40 und der Sammelschienenträger 12 angeordnet bzw. miteinander befestigt sind, im Wesentlichen senkrecht zu den in Fig. 8 gezeigten Klemmen 42, sodass der Sammelschienenträger 12 sich, wie in Fig. 9 sichtbar, neben bzw. seitlich und nicht hinter dem Adapter 40 erstreckt. Dies ist vorteilhaft, weil Kabelverteilerschränke 2 üblicherweise nur eine begrenzte Tiefe aufweisen. Die Sammelschienenträger 12 aber erfordern einen gewissen Bauraum und damit auch eine gewisse Tiefe. Würde der Sammelschienenträger 12 hinter dem Adapter 40 an dem Adapter 40 befestigt werden, würde die verfügbare Bauraumtiefe im Verteilschrank 2 möglicherweise nicht ausreichen, um den Verteilschrank 2 mittels der in Fig. 9 sichtbaren Tür zu verschließen.

### Bezugszeichenliste

- 2: Kabelverteilerschrank
- 4: Sammelschiene
- 6: Eingangsfeld
- 8: Ausgangsfeld
- 10: Sicherung
- 12: Sammelschienenträger
- 14: Schutzschalter
- 16: Messtechnik
- 17: Steuertechnik
- 18: Kommunikationstechnik
- 20: Basisplatte
- 20a: Vorderseite
- 20b: Rückseite
- 22: Ausnehmung
- 24: Querrichtung
- 26: Längsrichtung
- 28: Seitenwand
- 30: Deckel
- 32: Sammelschienenklemme
- 34: Kabel
- 36: Durchgangsöffnung
- 38: Kabel
- 40: Adapter
- 42: elektrisches Kontaktelement, Klemme
- 44: elektrische Leitung
- 46: Befestigungsmittel
- 48: elektrischer Kontakt
- 50: System
- 52: elektrische Isolierung

## Patentansprüche

1. Adapter (40) für einen Sammelschienenträger (12), wobei der Adapter (40) zumindest ein Befestigungsmittel (46) und zumindest drei voneinander beabstandete elektrische Kontaktelemente (42) aufweist, wobei das zumindest eine Befestigungsmittel (46) zur Befestigung des Sammelschienenträgers (12) an dem Adapter (40) eingerichtet ist, die elektrischen Kontaktelemente (42) dazu eingerichtet sind, elektrisch mit Sammelschienenklemmen (32) des Sammelschienenträgers (12) verbunden zu werden, wenn der Adapter (40) an dem Sammelschienenträger (12) befestigt wird, und die elektrischen Kontaktelemente (42) dazu eingerichtet sind, Sammelschienen (4) und/oder Sicherungen (10) in einem Kabelverteilerschrank (2) oder in einer Ortsnetzstation elektrisch zu kontaktieren,
**dadurch gekennzeichnet, dass**
der Adapter dazu ausgebildet ist, einen Sammelschienenträger (12) auch bei voller Belegung sämtlicher Ausgangsfelder (8) eines Verteilerschranks (2) in den Verteilerschrank (2) einsetzen zu können, und dass sich
die elektrischen Kontaktelemente (42) im Wesentlichen senkrecht zu einer mittels des zumindest einen Befestigungsmittels (46) vermittelbaren Befestigungsrichtung des Sammelschienenträgers (12) an dem Adapter (40) erstrecken.

2. Adapter (40) nach Anspruch 1, wobei die elektrischen Kontaktelemente (42) als Klemmen (42) ausgebildet sind.

3. Adapter (40) nach Anspruch 2, wobei jede der Klemmen (42) zumindest einen elektrischen Kontakt (48) und eine den zumindest einen elektrischen Kontakt (48) umgebende elektrische Isolierung (52) aufweisen.

4. Adapter (40) nach einem der voranstehenden Ansprüche, wobei der Adapter (40) zumindest ein Fixierungsmittel zur Fixierung des Adapters (40) innerhalb des Kabelverteilerschranks (2) aufweist.

5. Adapter (40) nach einem der voranstehenden Ansprüche, wobei der Adapter (40) ein Schwenkgelenk aufweist, an dem das zumindest eine Befestigungsmittel (46) angeordnet ist, sodass der Sammelschienenträger (12) relativ gegenüber dem Adapter (40) verschwenkt werden kann, wenn der Sammelschienenträger (12) am Adapter (40) befestigt ist, und/oder
wobei die elektrischen Kontaktelemente (42) ausziehbar und/oder abnehmbar ausgebildet sind.

6. Adapter (40) nach einem der voranstehenden Ansprüche, wobei ein erstes Befestigungsmittel an einer ersten Seite des Adapters (40) angeordnet ist und ein zweites Befestigungsmittel an einer der ersten Seite des Adapters (40) gegenüberliegenden zweiten Seite angeordnet ist.

7. System (50) aus einem Adapter (40) gemäß einem der voranstehenden Ansprüche und einem Sammelschienenträger (12), wobei der Sammelschienenträger (12) mittels des zumindest einen Befestigungsmittels (46) an dem Adapter (40) befestigt ist und die elektrischen Kontaktelemente (42) elektrisch mit den Sammelschienenklemmen (32) verbunden sind.

8. System (50) nach Anspruch 7, wobei der Sammelschienenträger (12) aufweist:
- eine Basisplatte (20),
- zumindest drei auf einer Rückseite der Basisplatte (20) angeordnete, in einer Längsrichtung der Basisplatte (20) voneinander beabstandete Sammelschienenklemmen (32), die elektrisch mit den elektrischen Kontaktelementen (42) verbunden sind,
- von einer jeden Sammelschiene (4) zu einer Vorderseite der Basisplatte (20) geführte, mit jeweils einem Schutzschalter (14), insbesondere einem Lasttrennschalter, verbundene elektrische Anschlussleitungen,
- zumindest ein auf der Basisplatte (20) montiertes Messgerät (16) zur elektrischen Eigenversorgung und zur Erfassung zumindest einer elektrischen Größe, wobei das Messgerät (16) mit zumindest einer der Sammelschienenklemmen (32) über zumindest einen Ausgang eines der Schutzschalter (14) verschaltet ist.

9. System (50) nach Anspruch 8, wobei die Basisplatte (20) eine Längenerstreckung in Längsrichtung von zumindest drei Sammelschienen (4) eines Kabelverteilerschranks (2) oder einer Ortsnetzstation aufweist, und/oder
wobei die Basisplatte (20) eine Breitenerstreckung in Breitenrichtung von einem oder einem ganzzahligen Vielfachen von einem Steckplatz eines Kabelverteilerschranks (2) eines Niederspannungsnetzes hat.

10. System (50) nach einem der Ansprüche 8 oder 9, wobei ein Nullleiterabgriff seitlich an der Basisplatte (20) geführt ist, und/oder
wobei ein auf der Basisplatte (20) montiertes Netzgerät zur elektrischen Eigenversorgung zumindest des Messgerätes (16) zwischen dem Messgerät (16) und zumindest einem Ausgang eines Schutzschalters (14) verschaltet ist.

11. System (50) nach einem der Ansprüche 8 bis 10, wobei auf der Basisplatte (20) ein Steuerrechner und/oder zumindest ein Kommunikationsmittel (18) montiert ist, und/oder wobei die Basisplatte (20) zusammen mit dem Deckel (30) eine Einbauhöhe von maximal 19 cm hat.

12. System (50) nach einem der Ansprüche 8 bis 11, wobei das Messgerät (16) mit Messsensorik, insbesondere mit an zumindest einem Ausgangsanschluss des Kabelverteilerschranks (2) angeordneter Messsensorik, verschaltet ist, das Messgerät (16) zumindest einen Analogeingang und/oder einen Digitaleingang aufweist und/oder das Messgerät (16) zumindest zur Leistungsmessung an einem Ausgangsanschluss und/oder an den Sammelschienenklemmen (32) eingerichtet ist.

13. System (50) nach einem der Ansprüche 8 bis 12, wobei die Messsensorik zumindest eine Rogowskispule zur Erfassung eines Stroms an zumindest einem Ausgangsanschluss des Kabelverteilerschranks (2) aufweist.

14. Kabelverteilerschrank (2) oder Ortsnetzstation mit einem System (50) nach einem der voranstehenden Ansprüche 7 bis 13.

15. Kabelverteilerschrank (2) oder Ortsnetzstation nach Anspruch 14, wobei alle Ausgangsfelder (8) des Kabelverteilerschranks (2) oder der Ortsnetzstation mit Sicherungen (10) bestückt sind und der Adapter (40) mit seinen elektrischen Kontaktelementen (42) die Sammelschienen (4) und/oder Sicherungen (10) eines der belegten Ausgangsfelder (8) elektrisch kontaktiert und vor diesem elektrisch kontaktierten Ausgangsfeld (8) angeordnet ist und/oder
wobei der Sammelschienenträger (12) vor einem Ausgangsfeld (8) angeordnet ist, welches unmittelbar zu dem Ausgangsfeld (8) benachbart ist, vor dem der Adapter (40) angeordnet ist.

## Claims

1. An adapter (40) for a busbar support (12), wherein the adapter (40) comprises at least one fastening means (46) and at least three spaced-apart electrical contact elements (42), wherein the at least one fastening means (46) is configured to fasten the busbar support (12) to the adapter (40), the electrical contact elements (42) are configured to be electrically connected to busbar terminals (32) of the busbar support (12) when the adapter (40) is fastened to the busbar support (12), and the electrical contact elements (42) are configured to make electrical contact with busbars (4) and/or fuses (10) in a cable distribution cabinet (2) or in a local network station,
**characterized in that**
the adapter is designed to allow a busbar support (12) to be inserted into the cable distribution cabinet (2) even when all output panels (8) of the cable distribution cabinet (2) are fully occupied, and that the electrical contact elements (42) extend substantially perpendicular to a mounting direction of the busbar support (12) on the adapter (40) that can be established by means of the at least one fastening means (46).

2. Adapter (40) according to claim 1, wherein the electrical contact elements (42) are designed as terminals (42).

3. Adapter (40) according to claim 2, wherein each of the terminals (42) comprises at least one electrical contact (48) and an electrical insulation (52) surrounding the at least one electrical contact (48).

4. Adapter (40) according to one of the preceding claims, wherein the adapter (40) comprises at least one fixing means for securing the adapter (40) within the cable distribution cabinet (2).

5. Adapter (40) according to one of the preceding claims, wherein the adapter (40) comprises a swivel joint on which the at least one fastening means (46) is arranged, such that the busbar support (12) can be pivoted relative to the adapter (40) when the busbar support (12) is fastened to the adapter (40), and/or
wherein the electrical contact elements (42) are designed to be extractable and/or removable.

6. Adapter (40) according to any one of the preceding claims, wherein a first fastening means is arranged on a first side of the adapter (40) and a second fastening means is arranged on a second side opposite the first side of the adapter (40).

7. System (50) comprising an adapter (40) according to any one of the preceding claims and a busbar support (12), wherein the busbar support (12) is fastened to the adapter (40) by means of the at least one fastening means (46) and the electrical contact elements (42) are electrically connected to the busbar terminals (32).

8. System (50) according to claim 7, wherein the busbar support (12) comprises:
- a base plate (20),
- at least three busbar terminals (32) arranged on a rear side of the base plate (20) and spaced apart from one another in a longitudinal direction of the base plate (20), which are electrically connected to the electrical contact elements (42),
- electrical connection lines leading from each busbar (4) to a front side of the base plate (20) and connected to a respective circuit breaker (14), in particular a load break switch,
- at least one measuring device (16) mounted on the base plate (20) for electrical self-supply and for measuring at least one electrical parameter, wherein the measuring device (16) is connected to at least one of the busbar terminals (32) via at least one output of one of the circuit breakers (14).

9. System (50) according to claim 8, wherein the base plate (20) has a longitudinal extent in the longitudinal direction of at least three busbars (4) of a cable distribution cabinet (2) or a local network station, and/or
wherein the base plate (20) has a width extending in the width direction of one or an integer multiple of one slot of a cable distribution cabinet (2) of a low-voltage network.

10. System (50) according to any one of claims 8 or 9, wherein a neutral tap is routed laterally on the base plate (20), and/or
wherein a power supply unit mounted on the base plate (20) for the electrical self-supply of at least the measuring device (16) is connected between the measuring device (16) and at least one output of a circuit breaker (14).

11. System (50) according to any one of claims 8 to 10, wherein a control computer and/or at least one communication device (18) is mounted on the base plate (20), and/or wherein the base plate (20) together with the cover (30) has a maximum installation height of 19 cm.

12. System (50) according to any one of claims 8 to 11, wherein the measuring device (16) is connected to measuring sensors, in particular to measuring sensors arranged at at least one output connection of the cable distribution cabinet (2), the measuring device (16) has at least one analog input and/or one digital input, and/or the measuring device (16) is configured at least for power measurement at an output connection and/or at the busbar terminals (32).

13. System (50) according to any one of claims 8 to 12, wherein the measuring sensors comprise at least one Rogowski coil for detecting a current at at least one output connection of the cable distribution cabinet (2).

14. Cable distribution cabinet (2) or local network station comprising a system (50) according to any one of the preceding claims 7 to 13.

15. Cable distribution cabinet (2) or local network station according to claim 14, wherein all output panels (8) of the cable distribution cabinet (2) or the local network station are equipped with fuses (10) and the adapter (40) makes electrical contact with the busbars (4) and/or fuses (10) of one of the occupied output panels (8) and is arranged in front of this electrically contacted output panel (8) and/or
wherein the busbar support (12) is arranged in front of an output panel (8) that is immediately adjacent to the output panel (8) in front of which the adapter (40) is arranged.

## Revendications

1. Adaptateur (40) pour un support de barres omnibus (12), l'adaptateur (40) comportant au moins un moyen de fixation (46) et au moins trois éléments de contact électrique (42) espacés les uns des autres, le moyen de fixation (46) étant agencé pour fixer le support de barres omnibus (12) sur l'adaptateur (40), les éléments de contact électrique (42) étant agencés pour être reliés électriquement à des bornes de barres omnibus (32) du support de barres omnibus (12) lorsque l'adaptateur (40) est fixé au support de barres omnibus (12), et les éléments de contact électrique (42) étant agencés pour mettre en contact électrique des barres omnibus (4) et/ou des fusibles (10) dans une armoire de distribution de câbles (2) ou dans une station de réseau local,
**caractérisé en ce que**
l'adaptateur est conçu pour pouvoir insérer un support de barres omnibus (12) dans l'armoire de distribution de câbles (2) même lorsque tous les panneaux de sortie (8) de l'armoire de distribution de câbles (2) sont entièrement occupés, et **en ce que** les éléments de contact électriques (42) s'étendent sur l'adaptateur (40) essentiellement perpendiculairement à une direction de fixation du support de barres omnibus (12) pouvant être définie au moyen dudit au moins un moyen de fixation (46).

2. Adaptateur (40) selon la revendication 1, dans lequel les éléments de contact électrique (42) sont conçus comme des bornes (42).

3. Adaptateur (40) selon la revendication 2, dans lequel chacune des bornes (42) comporte au moins un contact électrique (48) et une isolation électrique (52) entourant ledit au moins un contact électrique (48).

4. Adaptateur (40) selon l'une des revendications précédentes, dans lequel l'adaptateur (40) comporte au moins un moyen d'immobilisation pour fixer l'adaptateur (40) à l'intérieur de l'armoire de distribution de câbles (2).

5. Adaptateur (40) selon l'une des revendications précédentes, dans lequel l'adaptateur (40) comporte une articulation pivotante sur laquelle est disposé ledit au moins un moyen de fixation (46), de sorte que le support de barres omnibus (12) peut pivoter par rapport à l'adaptateur (40) lorsque le support de barres omnibus (12) est fixé à l'adaptateur (40), et/ou dans lequel les éléments de contact électriques (42) sont conçus pour être extractibles et/ou amovibles.

6. Adaptateur (40) selon l'une des revendications précédentes, dans lequel un premier moyen de fixation est disposé sur un premier côté de l'adaptateur (40) et un deuxième moyen de fixation est disposé sur un deuxième côté opposé au premier côté de l'adaptateur (40).

7. Système (50) composé d'un adaptateur (40) selon l'une des revendications précédentes et d'un support de barres omnibus (12), le support de barres omnibus (12) étant fixé à l'adaptateur (40) au moyen dudit au moins un moyen de fixation (46) et les éléments de contact électriques (42) étant reliés électriquement aux bornes de barres omnibus (32).

8. Système (50) selon la revendication 7, dans lequel le support de barres omnibus (12) comprend :
- une plaque de base (20),
- au moins trois bornes de barres omnibus (32) disposées sur une face arrière de la plaque de base (20), espacées les unes des autres dans une direction longitudinale de la plaque de base (20), qui sont reliées électriquement aux éléments de contact électriques (42),
- des lignes de raccordement électriques menant de chaque barre omnibus (4) vers une face avant de la plaque de base (20) et reliées chacune à un disjoncteur (14), en particulier un sectionneur,
- au moins un appareil de mesure (16) monté sur la plaque de base (20) pour l'alimentation électrique autonome et pour la détection d'au moins une grandeur électrique, l'appareil de mesure (16) étant relié à au moins l'une des bornes de barres omnibus (32) par l'intermédiaire d'au moins une sortie de l'un des disjoncteurs (14).

9. Système (50) selon la revendication 8, dans lequel la plaque de base (20) s'étend dans le sens longitudinal sur au moins trois barres omnibus (4) d'une armoire de distribution de câbles (2) ou d'une station de réseau local, et/ou
dans lequel la plaque de base (20) s'étend en largeur sur la largeur d'un emplacement ou d'un multiple entier d'un emplacement d'une armoire de distribution de câbles (2) d'un réseau basse tension.

10. Système (50) selon l'une des revendications 8 ou 9, dans lequel une prise de neutre est guidée latéralement sur la plaque de base (20), et/ou
dans lequel un bloc d'alimentation monté sur la plaque de base (20) pour l'alimentation électrique autonome au moins de l'appareil de mesure (16) est connecté entre l'appareil de mesure (16) et au moins une sortie d'un disjoncteur (14).

11. Système (50) selon l'une des revendications 8 à 10, dans lequel un ordinateur de commande et/ou au moins un moyen de communication (18) est monté sur la plaque de base (20), et/ou
dans lequel la plaque de base (20) présente, conjointement avec le couvercle (30), une hauteur d'encastrement maximale de 19 cm.

12. Système (50) selon l'une des revendications 8 à 11, dans lequel l'appareil de mesure (16) est relié à des capteurs de mesure, en particulier à des capteurs de mesure disposés sur au moins un raccordement de sortie de l'armoire de distribution de câbles (2), l'appareil de mesure (16) comporte au moins une entrée analogique et/ou une entrée numérique et/ou l'appareil de mesure (16) est conçu au moins pour la mesure de puissance au niveau d'un raccordement de sortie et/ou au niveau des bornes de barres omnibus (32).

13. Système (50) selon l'une des revendications 8 à 12, dans lequel le système de capteurs de mesure comporte au moins une bobine de Rogowski pour détecter un courant au niveau d'au moins un raccordement de sortie de l'armoire de distribution de câbles (2).

14. Armoire de distribution de câbles (2) ou station de réseau local comprenant un système (50) selon l'une des revendications 7 à 13 précédentes.

15. Armoire de distribution de câbles (2) ou station de réseau local selon la revendication 14, dans laquelle tous les panneaux de sortie (8) de l'armoire de distribution de câbles (2) ou de la station de réseau local sont équipés de fusibles (10) et l'adaptateur (40) est en contact électrique, par ses éléments de contact électriques (42), avec les barres omnibus (4) et/ou les fusibles (10) de l'un des panneaux de sortie (8) occupés et est disposé devant ce panneau de sortie (8) mis en contact électrique et/ou
dans laquelle le support de barres omnibus (12) est disposé devant un panneau de sortie (8) qui est immédiatement adjacent au panneau de sortie (8) devant lequel l'adaptateur (40) est disposé.
